# EUROPEAN PATENT SPECIFICATION

(11) **EP 1 013 170 B1**
(45) Date of publication and mention of the grant of the patent: **21.07.2004**
(21) Application number: 98310583.4
(22) Date of filing: 22.12.1998
(51) Int. Cl.: A01N 43/56, A01N 53/00

(54) **Method of insect control**
Verfahren zur Schädlingsbekämpfung
Procédé pour la lutte contre les insectes

(43) Date of publication of application: 28.06.2000
(73) Proprietor: Bayer CropScience S.A., 69009 Lyon (FR)
(72) Inventor: Holmes, Keith A., Cary, North Carolina 27511 (US)
(74) Representative: Bentham, Stephen

(56) References cited:
- WO-A-93/06089
- WO-A-95/22902
- US-A- 5 516 787
- C. D. S. TOMLIN (ED.): "The Pesticide Manual" 1997 , BRITISH CROP PROTECTION COUNCIL , FARNHAM XP002103044 page 545 - 547: Fipronil: 'Applications'.

## Description

The present invention relates to a new method of controlling destructive insects, a new composition and a product which comprises the composition.

WO 95/22902 describes a termite control composition comprising a 3-cyano-1-(substituted phenyl)pyrazole derivative and a pyrethroid compound. The composition is used not only to treat soil to protect wood but also in timber products and vinyl products. US-5516787 describes an insecticidal/acaricidal composition comprising synergistic amounts of certain specific pyrethroids and three aryldiazoles one of which is fipronil: the only specific pests mentioned are cockroaches.

It is known that 5-amino-3-cyano-1-(2,6-dichloro-4-trifluoromethylphenyl)-4-trifluoromethylsulfinylpyrazole (fipronil) may be applied to corn seed at the time of planting to protect the said corn seed and the plants which emerge from the seed from *inter alia*, rootworms, e.g., *Diabrotica undecimpunctata howardi* and corn borers, e.g., *Ostrinia nubilalis*. In some cases, however, fipronil provides less than optimum activity against soil born pests, particularly against rootworm generally from the time of planting to the V6 growth stage of the corn plant.

It is also known to apply insecticidally effective amounts of pyrethroid insecticides at the time of planting to control certain pests, *inter alia*, rootworms, e.g., *Diabrotica undecimpunctata howardi.*

An object of the present invention is to provide an improved method of control of insects, particularly insects destructive to corn.

Another object of the present invention is to provide a long-lasting control of insects destructive to corn.

Another object of the present invention is to provide an improved method of using an insecticidal 1-arylpyrazole.

Another object of the present invention is to provide an improved method of using a pyrethroid insecticide.

These and other objects are met in whole or in part by the present invention.

The present invention provides a method of protecting a corn plant from destructive insects which method comprises applying to the seed from which it grows or the soil from which the seed grows, the soil being at a temperature of 4° to 25 °C, an insecticidal 1-arylpyrazole and, as insect repellent, a substantially non-lethal amount of a pyrethroid insecticide, which 1-arylpyrazole is a compound of formula (I): 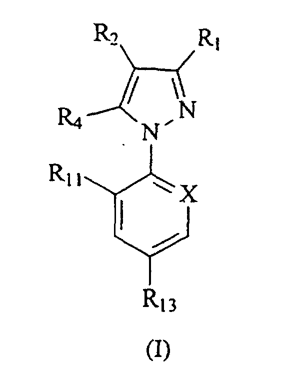 wherein:
R₁ is CN or methyl;
R₂ is S(O)ₙR₃;
R₃ is alkyl or haloalkyl;
R₄ is selected from the group consisting of a hydrogen atom, a halogen atom, and a radical which may be -NR₅R₆, -C(O)OR₇, -S(O)ₘR₇, alkyl, haloalkyl, OR₈, or -N=C(R₉)(R₁₀);
R₅ and R₆ are independently selected from a hydrogen atom, alkyl, haloalkyl, -C(O)alkyl, -S(O)ᵣCF₃ and -C(O)OR₇; or R₅ and R₆ form together a divalent radical which may be interrupted by one or more heteroatoms, preferably selected from oxygen, nitrogen and sulphur;
R₄ is preferably an amino group, which is unsubstituted or which bears one or two substituents selected from the group consisting of alkyl, haloalkyl, acyl and alkoxycarbonyl;
R₇ is selected from alkyl and haloalkyl;
R₈ is selected from alkyl, haloalkyl and the hydrogen atom;
R₉ is selected from the hydrogen atom and alkyl;
R₁₀ is selected from phenyl and heteroaryl each of which is unsubstituted or substituted by one or more hydroxy, halogen , O-alkyl, -S-alkyl, cyano, or alkyl or combinations thereof;
X is selected from the nitrogen atom and the radical C-R₁₂;
R₁₁ and R₁₂ are independently selected from a halogen atom and the hydrogen atom;
R₁₃ is selected from a halogen atom, haloalkyl, haloalkoxy, S(O)_{q}CF₃ and -SF₅, preferably from a halogen atom, haloalkyl, haloalkoxy, -SF₅;
m,n,q,r are independently selected from 0,1 and 2;
provided that when R₁ is methyl, R₃ is haloalkyl, R₄ is NH₂, R₁₁ is Cl, R₁₃ is CF₃, and X is N. The 1-arylpyrazole and insect repellent are generally applied in a composition comprising them.

The alkyl and alkoxy groups of the formula (I) are preferably lower alkyl and alkoxy groups, that is, radicals having one to four carbon atoms. The haloalkyl and haloalkoxy groups likewise preferably have one to four carbon atoms. The haloalkyl and haloalkoxy groups can bear one or more halogen atoms; preferred groups of this type include -CF₃ and -OCF₃. It is to be understood that the ring formed by the divalent alkylene radical represented by R₅ and R₆ and including the nitrogen atom to which R₅ and R₆ are attached is generally a 5, 6, or 7-membered ring. When R₁₀ is heteroaryl, it is preferably pyridyl, most preferably 2-pyridyl. It is to be understood that the 1-arylpyrazles of formula (I) include enantiomers and/or diastereomers thereof.

The preparation of compounds of formula (I) can be effected according to any process described in International Patent Publications No. WO 87/03781, WO 93/06089 and WO 94/21606, as well as in European Patent Publication numbers 0295117, 0403300, 0385809 and 0679650, German Patent Publication 19511269 and United States Patents 5,232,940 and 5,236,938.

Preferably the compound of formula (I) has one or more of the following features:
R₁ is CN;
R₄ is -NR₅R₆;
R₅ and R₆ are independently selected from the hydrogen atom, alkyl, haloalkyl, -C(O)alkyl, C(O)OR₇;
X is C-R₁₂; or
R₁₃ is selected from a halogen atom, haloalkyl, haloalkoxy and SF_{5.}

Most preferably the compound of formula (I) is 5-amino-3-cyano-1-(2,6-dichloro-4-trifluoromethylphenyl)-4-trifluoromethylsulfinylpyrazole (i.e. fipronil) or 5-amino-3-cyano-1-(2,6-dichloro-4-trifluoromethylphenyl)-4-ethylsulfinylpyrazole hereinafter known as Compound B.

The repellent is applied in a substantially non-lethal amount. By the term "substantially non-lethal" is meant an amount, which when delivered to the soil alone kills less than 10% of the pests so-controlled by the method of the invention. Preferably the repellent kills less than 5% of the pests.

Preferably, the repellent is a pyrethroid insecticide that is selected from the group consisting of tefluthrin, permethrin, fenvalerate, esfenvalerate, cypermethrin, cyhalothrin, lambda-cyhalothrin, bifenthrin and deltamethrin.

Generally the pests controlled by the method include *Agrotis spp*., e.g, Black cutworm, rootworms, including *Diabrotica spp*., e.g. *Diabrotica undecimpunctata howardi* or *Diabrotica virgifera;* or corn seed maggot, e.g. *Hylemya platura, Chortophila platura, Chortophila cilicrura, Hylemya cilicrura, Phorbia platura, Chortophila funesta, Chortophila fusciceps, Crinura cilicrura, Crinura platura, Crinura fusciceps, Crinura funesta, Delia cilicrura, Delia funesta, Delia fusciceps, Hylemya funesta, Hylemya fusciceps, Phorbia cilicrura, Phorbia funesta, Phorbia fusciceps, Hylemya cana, Delia cana, Hylemya cana,* or *Delia platura.*

Generally, the weight to weight ratio of the insecticidal 1-arylpyrazole to the repellent is from 2:1 to 200:1, preferably from 5:1 to 75:1, most preferably from 8:1 to 50:1.

The composition is generally applied as a liquid composition to the soil or as a seed treatment to the seed from which the corn plant grows.

In a highly preferred embodiment, the liquid composition may be directed into the soil mixing zone below the level of the top of a furrow in which the corn seed may be planted. In this way, the composition may be incorporated in the soil below the level of the soil, on the seed and above the seed as the furrow is closed. The application spray can be a stream of liquid or a conical spray.

Generally, the volume of liquid to be used per unit land area is from 0.1 to 50 gallons per acre (0.9 to 470 L/ha), preferably from 0.2 to 10 gal/A (1.9-90 L/ha), more preferably from 0.5 to 5 gal/A (2.7 - 47 L/ha), most preferably from 1 to 3 gal/A (9.4 - 28 L/ha).

The repellent pyrethroid insecticide is preferably used at about 1% to 90% of the labelled insecticidal use rate, preferably from 5% to 50%. The following table provides a general guidance to preferred rates to be used in the method of the present invention.

| Repellent | Current Field Use Rate in Corn (lb.ai/acre) | Use rate According to the present Invention (lb. ai/acre) |
|---|---|---|
| tefluthrin | 0.075 - 0.15 | 0.001 - 0.02 |
| esfenvalerate | 0.03 - 0.05 | 0.001 - 0.02 |
| lambda-cyhalothrin | 0.015 - 0.030 | 0.001 - 0.01 |
| permethrin | 0.1 - 0.2 | 0.01 - 0.02 |
| cyfluthrin | not labelled | 0.001 - 0.05 |

The abbreviation "ai" means active ingredient.

The rate of use of the 1-arylpyrazole is generally from 0.01 lb. per acre (11 g per hectare) to about 2.2 lb/acre (1000 g/Ha), preferably from 20 to 200 g/Ha.

In a highly preferred embodiment of the invention, the composition is applied when the soil temperature is from 10°C to 20°C. In this way there is a better insecticidal effect on the above insect species than with the 1-arylpyrazole insecticide alone.

The method of the present invention may be carried out using an agriculturally acceptable composition for protecting corn plants from destructive insects which comprises an insecticidal 1-arylpyrazole as defined above and a pyrethroid insecticide as repellent, preferably a substantially non-lethal amount of an insect repellent as defined above. The composition may be, for example, a liquid composition or a granular composition, preferably a liquid composition in use. Liquid compositions include those known to the skilled addressee and emulsifiable concentrates, suspension concentrates or aqueous emulsions are generally preferred.

A product comprising an insecticidal 1-arylpyrazole as defined above and a repellent for simultaneous, separate or sequential use in the control of destructive insects of corn on or on the soil from which the corn grows may also be used. Preferably the product may be a premixed product which comprises both the 1-arylpyrazole and the repellent.

The following Example illustrates the invention:

### Example 1

Corn seed is planted in a field where the average temperature of the soil is about 10°C. As the corn seed is planted, fipronil (as the commercial product Regent® 80WG) and lambda-cyhalothrin (as the commercial product Warrior®) are applied simultaneously on the seed as a liquid composition in water at rates of 0.13 lbs/acre (0.15 kg/Ha) and 0.01 lbs/acre (0.011 kg/Ha) respectively. One part of the field is treated with Regent 80WG at 0.13 lbs./acre alone. After 4 weeks, several plants are removed to determine the damage to the roots and stalks. The treatment with fipronil and lambda-cyhalothrin provides a lower numerical Iowa Root rating than the treatment with the Regent alone. There is less damage from Black cutworm in the fipronil + lambda-cyhalothrin treatment than in the fipronil treatment.

### Example 2

The procedure of Example 1 is used with fipronil (as the commercial product Regent® 4SC) and Cyfluthrin (as the commercial product Baythroid®) at rates of 0.13 lbs/acre (0.15 kg/Ha) and 2.6 ounces product/acre (0.023 kg/Ha). One part of the field is treated with Regent® 4SC at 0.13 lbs/acre (0.15 kg/Ha) alone and another part of the field is treated with Baythroid® at 2.6 ounces product/acre (0.023 kg/Ha) alone.

Toward the end of the growing season, the plants are removed to determine damage to the roots. The following results are observed.

| Treatment | Iowa Root Rating |
|---|---|
| Regent 4SC | 3.4 |
| Baythroid | 4.2 |
| Regent + Baythroid | 2.6 |

## Claims

1. A method of protecting a corn plant from destructive insects which method comprises applying to the seed from which it grows or to the soil from which the seed grows, the soil being at a temperature of 4° to 25°C, an insecticidal 1-arylpyrazole and, as insect repellent, a substantially non-lethal amount of a pyrethroid insecticide, which 1-arylpyrazole is a compound of formula (I): 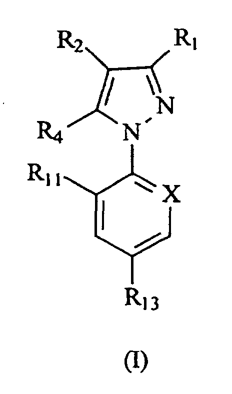 wherein:
R₁ is CN or methyl;
R₂ is S(O)ₙR₃;
R₃ is alkyl or haloalkyl;
R₄ is selected from the group consisting of a hydrogen atom, a halogen atom, and a radical which may be -NR₅R₆, -C(O)OR₇, -S(O)ₘR₇, alkyl, haloalkyl, OR₈, or - N=C(R₉)(R₁₀);
R₅ and R₆ are independently selected from a hydrogen atom, alkyl, haloalkyl, - C(O)alkyl, -S(O)ᵣCF₃ and -C(O)OR₇; or R₅and R₆ form together a divalent radical which may be interrupted by one or more heteroatoms;
R₄ is preferably an amino group, which is unsubstituted or which bears one or two substituents selected from the group consisting of alkyl, haloalkyl, acyl and alkoxycarbonyl;
R₇ is selected from alkyl and haloalkyl;
R₈ is selected from alkyl, haloalkyl and the hydrogen atom;
R₉ is selected from the hydrogen atom and alkyl;
R₁₀ is selected from phenyl and heteroaryl each of which is unsubstituted or substituted by one or more hydroxy, halogen, O-alkyl, -S-alkyl, cyano, or alkyl or combinations thereof;
X is selected from the nitrogen atom and the radical C-R₁₂;
R₁₁ and R₁₂ are independently selected from a halogen atom and the hydrogen atom;
R₁₃ is selected from a halogen atom, haloalkyl, haloalkoxy, S(O)_{q}CF₃ and -SF₅;
m, n, q,r are independently selected from 0, 1 and 2;
provided that when R₁ is methyl, R₃ is haloalkyl, R₄ is NH₂, R₁₁ is Cl, R₁₃ is CF₃, and X is N.

2. A method according to claim 1 wherein R₁₃ is selected from a halogen atom, haloalkyl, haloalkoxy and -SF₅.

3. A method according to claim 1 or 2 wherein the pyrethroid insecticide is selected from the group consisting of tefluthrin, permethrin, fenvalerate, esfenvalerate, cypermethrin, cyhalothrin, lambda-cyhalothrin, bifenthrin and deltamethrin.

4. A method according to claims 1, 2 or 3 wherein the insect is *Agrotis spp*., a rootworm or corn seed maggot.

5. A method according to claim 1, 2 or 3 wherein the insect is black cutworm, *Diabrotica spp., Hylemya platura, Chortophila platura, Chortophila cilicrura, Hylemya cilicrura, Phorbia platura, Chortophila funesta, Chortophila* *fusciceps, Crinura cilicrura, Crinura platura, Crinura fusciceps, Crinura funesta, Delia cilicrura, Delia funesta, Delia fusciceps, Hylemya funesta, Hylemya fusciceps, Phorbia cilicrura, Phorbia funesta, Phorbia fusciceps, Hylemya cana, Delia cana, Hylemya cana,* or *Delia platura.*

6. A method according to claim 1, 2 or 3 wherein the insect is *Diabrotica undecimpunctata howardi* or *Diabrotica virgifera*.

7. A method according to any one of the foregoing claims wherein the 1-arylpyrazole has one or more of the following features:
R₁ is CN;
R₄ is -NR₅R₆;
R₅ and R₆ are independently selected from the hydrogen atom, alkyl, haloalkyl, -C(O)alkyl, C(O)OR₇;
X is C-R₁₂; or
R₁₃ is selected from a halogen atom, haloalkyl, haloalkoxy and SF₅.

8. A method according to any one of the foregoing claims wherein the insecticidal 1-arylpyrazole is 5-amino-3-cyano-1-(2,6-dichloro-4-trifluoromethylphenyl)-4-trifluoromethylsulfinylpyrazole.

9. A method according to any one of the foregoing claims wherein the weight to weight ration of the insecticidal 1-arylpyrazole to the repellent is from 2:1 to 200:1.

10. A method according to claim 9 wherein the ratio is 5:1 to 75:1.

11. A method according to claim 9 wherein the ratio is 8:1 to 50:1.

12. A method according to any one of the foregoing claims wherein the composition is applied when the soil temperature is from 10° to 20°C.

13. A method according to any one of the foregoing claims wherein the insecticidal 1-arylpyrazole is applied at a rate of from 11 grams per hectare to 1000 g/Ha.

## Patentansprüche

1. Ein Verfahren zum Schutz einer Getreidepflanze vor zerstörenden Insekten, wobei das Verfahren folgendes umfasst: Aufbringen auf das Saatgut, aus dem sie wächst, oder auf den Boden, aus dem das Saatgut wächst, wobei der Boden eine Temperatur von 4° bis 25°C aufweist, von einem insektiziden 1-Arylpyrazol und als Insektenschutzmittel eine im wesentlichen nicht-tödliche Menge eines Pyrethroid-Insektizids, wobei das 1-Arylpyrazol eine Verbindung der Formel (I) ist: 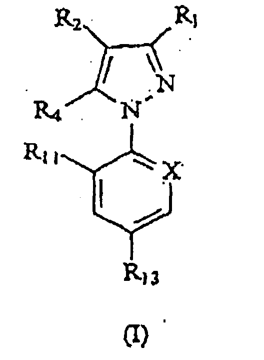 worin:
R₁ für CN oder Methyl steht;
R₂ für S(O)ₙR₃ steht;
R₃ für Alkyl oder Halogenalkyl steht;
R₄ aus der Gruppe gewählt ist, die aus einem Wasserstoffatom, einem Halogenatom und einem Rest, der für -NR₅R₆, -C(O)OR₇, -S(O)ₘR₇, Alkyl, Halogenalkyl, OR₈ oder -N=C(R₉)(R₁₀) stehen kann, besteht;
R₅ und R₆ unabhängig voneinander aus einem Wasserstoffatom, Alkyl, Halogenalkyl, -C(O)Alkyl, -S(O)ᵣCF₃ und -C(O)OR₇ ausgewählt sind, oder R₅ und R₆ bilden zusammen einen divalenten Rest, der von einem oder mehreren Heteroatomen unterbrochen sein kann;
R₄ bevorzugt für eine Aminogruppe steht, die unsubstituiert ist oder einen oder zwei Substituenten trägt, der bzw. die aus der Gruppe bestehend aus Alkyl, Halogenalkyl, Acyl und Alkoxycarbonyl ausgewählt ist bzw. sind;
R₇ aus Alkyl und Halogenalkyl gewählt ist;
R₈ aus Alkyl, Halogenalkyl und Wasserstoffatom gewählt ist;
R₉ aus Wasserstoffatom und Alkyl gewählt ist;
R₁₀ aus Phenyl und Heteroaryl gewählt ist, wobei jedes davon unsubstituiert oder mit einem oder mehreren Hydroxy, Halogen, O-Alkyl, -S-Alkyl, Cyano oder Alkyl oder Kombinationen davon substituiert ist;
X aus dem Stickstoffatom und dem Rest C-R₁₂ gewählt ist;
R₁₁ und R₁₂ unabhängig voneinander aus einem Halogenatom und Wasserstoffatom gewählt sind;
R₁₃ aus einem Halogenatom, Halogenalkyl, Halogenalkoxy, S(O)_{q}CF₃ und -SF₅ gewählt ist;
m, n, q und r unabhängig voneinander aus 0, 1 und 2 gewählt sind;
unter der Maßgabe, dass wenn R₁ für Methyl steht, R₃ für Halogenalkyl steht, R₄ für NH₂ steht, R₁₁ für Cl steht, R₁₃ für CF₃ steht und X für N steht.

2. Ein Verfahren gemäß Anspruch 1, worin R₁₃ aus einem Halogenatom, Halogenalkyl, Halogenalkoxy und -SF₅ gewählt ist.

3. Ein Verfahren gemäß Anspruch 1 oder 2, worin das Pyrethroid-Insektizid aus der Gruppe gewählt ist, die aus Tefluthrin, Permethrin, Fenvalerat, Esfenvalerat, Cypermethrin, Cyhalothrin, Lambda-Cyhalothrin, Bifenthrin und Deltamethrin besteht.

4. Ein Verfahren gemäß den Ansprüchen 1, 2 oder 3, worin das Insekt *Agrotis spp*., ein Wurzelwurm oder eine Saatenfliege ist.

5. Ein Verfahren gemäß einem der Ansprüche 1, 2 oder 3, worin das Insekt schwarze Erdraupe, *Diabrotica spp., Hylemya platura, Chortophila platura, Chortophila cilicrura, Hylemya cilicrura, Phorbia platura, Chortophila funesta, Chortophila fusciceps, Crinura cilicrura, Crinura platura, Crinura fusciceps, Crinura funesta, Delia cilicrura, Delia funesta, Delia fusciceps, Hylemya funesta, Hylemya fusciceps, Phorbia cilicrura, Phorbia funesta, Phorbia fusciceps, Hylemya cana, Delia cana* oder *Delia platura* ist.

6. Ein Verfahren gemäß einem der Ansprüche 1, 2 oder 3, worin das Insekt *Diabrotica undecimpunctata howardi* oder *Diabrotica virgifera* ist.

7. Ein Verfahren gemäß einem der vorhergehenden Ansprüche, worin das 1-Arylpyrazol eines oder mehrere der folgenden Merkmale aufweist:
R₁ steht für CN;
R₄ steht für -NR₅R₆;
R₅ und R₆ sind unabhängig voneinander aus Wasserstoffatom, Alkyl, Halogenalkyl, -C(O)Alkyl, C(O)OR₇ gewählt;
X steht für C-R₁₂; oder
R₁₃ ist aus einem Halogenatom, Halogenalkyl, Halogenalkoxy und SF₅ gewählt.

8. Ein Verfahren gemäß einem der vorhergehenden Ansprüche, worin das insektizide 1-Arylpyrazol 5-Amino-3-cyan-1-(2,6-dichlor-4-trifluormethylphenyl)-4-trifluormethylsulfinylpyrazol ist.

9. Ein Verfahren gemäß einem der vorhergehenden Ansprüche, worin das Gewicht zu Gewicht Verhältnis von dem insektiziden 1-Arylpyrazol zu dem Insektenschutzmittel 2:1 bis 200:1 beträgt.

10. Ein Verfahren gemäß Anspruch 9, worin das Verhältnis 5:1 bis 75:1 beträgt.

11. Ein Verfahren gemäß Anspruch 9, worin das Verhältnis 8:1 zu 50:1 beträgt.

12. Ein Verfahren gemäß einem der vorhergehenden Ansprüche, worin die Zusammensetzung aufgebracht wird, wenn die Bodentemperatur von 10° bis 20°C beträgt.

13. Ein Verfahren gemäß einem der vorhergehenden Ansprüche, worin das insektizide 1-Arylpyrazol in einer Menge von 11 Gramm pro Hektar bis 1000 g / Ha aufgebracht wird.

## Revendications

1. Procédé pour la protection d'un plant de maïs contre des insectes destructeurs, procédé qui comprend l'application aux semences à partir desquelles se développe ce plant de maïs ou bien au sol à partir duquel se développent ces semences, le sol étant à une température comprise dans l'intervalle de 4° à 25°C, d'un 1-arylpyrazole insecticide et, comme répulsif pour les insectes, d'une quantité substantiellement non létale d'un insecticide pyréthroïde, 1-arylpyrazole qui est un composé de formule (I) : 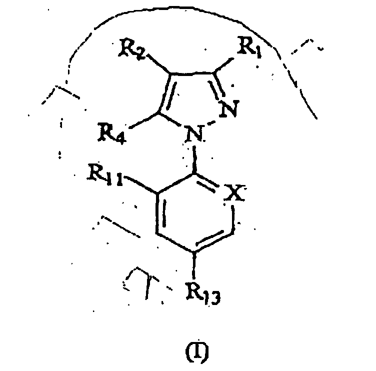 dans laquelle :
R₁ représente un groupe CN ou méthyle ;
R₂ représente un groupe S(O)ₙR₃ ;
R₃ représente un groupe alkyle ou halogénalkyle ;
R₄ est choisi dans le groupe consistant en un atome d'hydrogène, un atome d'halogène et un radical qui peut être un radical -NR₅R₆, -C(O)OR₇, -S(O)ₘR₇, alkyle, halogénalkyle, OR₈ ou -N=C(R₉)(R₁₀) ;
R₅ et R₆ sont choisis indépendamment entre un atome d'hydrogène, des groupes alkyle, halogénalkyle, -C(O)alkyle, -S(O)ᵣCF₃ et -C(O)OR₇ ; ou bien R₅ et R₆ forment conjointement un radical divalent qui peut être interrompu par un ou plusieurs hétéroatomes ;
R₄ représente de préférence un groupe amino, qui est non substitué ou qui porte un ou deux substituants choisis dans le groupe consistant en des substituants alkyle, halogénalkyle, acyle et alkoxycarbonyle ;
R₇ est choisi entre des groupes alkyle et halogénalkyle ;
R₈ est choisi entre un groupe alkyle, un groupe halogénalkyle et un atome d'hydrogène ;
R₉ est choisi entre un atome d'hydrogène et un groupe alkyle ;
R₁₀ est choisi entre des groupes phényle et hétéroaryle, dont chacun est non substitué du substitué avec un ou plusieurs substituants hydroxy, halogéno, O-alkyle, -S-alkyle, cyano, alkyle ou leurs associations ;
X est choisi entre un atome d'azote et le radical C-R₁₂ ;
R₁₁ et R₁₂ sont choisis indépendamment entre un atome d'halogène et un atome d'hydrogène ;
R₁₃ est choisi entre un atome d'halogène, des groupes halogénalkyle, halogénalkoxy, S(O)_{q}CF₃ et -SF₅ ;
m, n, q et r sont choisis indépendamment entre 0, 1 et 2 ; sous réserve que, lorsque R₁ représente un groupe méthyle, R₃ représente un groupe halogénalkyle, R₄ représente NH₂, R₁₁ représente un groupe Cl, R₁₃ représente un groupe CF₃ et X représente N.

2. Procédé suivant la revendication 1, dans lequel R₁₃ est choisi entre un atome d'halogène, des groupes halogénalkyle, halogénalkoxy et -SF₅.

3. Procédé suivant la revendication 1 ou 2, dans lequel l'insecticide pyréthroïde est choisi dans le groupe consistant en téfluthrine, perméthrine, fenvalérate, esfenvalérate, cyperméthrine, cyhalothrine, lambda-cyhalothrine, bifenthrine et deltaméthrine.

4. Procédé suivant la revendication 1, 2 ou 3, dans lequel l'insecte est *Agrotis spp*., un ver des racines ou la mouche grise des semis.

5. Procédé suivant la revendication 1, 2 ou 3, dans lequel l'insecte est la noctuelle hypsilon, *Diabrotica ssp., Hylemya platura, Chortophila platura, Chortophila* *cilicrura, Hylemya cilicrura, Phorbia platura, Chortophila funesta, Chortophila fusciceps, Crinura cilicrura, Crinura platura, Crinura fusciceps, Crinura funesta, Delia cilicrura, Delia funesta, Delia fusciceps, Hylemya funesta, Hylemya fusciceps, Phorbia cilicrura, Phorbia funesta, Phorbia fusciceps, Xylemya cana, Delia cana, Hylemya cana ou Delia platura*.

6. Procédé suivant la revendication 1, 2 ou 3, dans lequel l'insecte est *Diabrotica undecimpunctata howardi* ou *Diabrotica virgifera*.

7. Procédé suivant l'une quelconque des revendications précédentes, dans lequel le 1-arylpyrazole a une ou plusieurs des caractéristiques suivantes :
R₁ représente un groupe CN ;
R₄ représente -NR₅R₆ ;
R₅ et R₆ sont choisis indépendamment entre un atome d'hydrogène, des groupes alkyle, halogénalkyle, -C(O)alkyle, -C(O)OR₇ ;
X représente un groupe C-R₁₂ ; ou
R₁₃ est choisi entre un atome d'halogène, des groupes halogénalkyle, halogénalkoxy et SF₅.

8. Procédé suivant l'une quelconque des revendications précédentes, dans lequel le 1-arylpyrazole insecticide est le 5-amino-3-cyano-1-(2,6-dichloro-4-trifluorométhylphényl)-4-trifluorométhylsulfinylpyrazole.

9. Procédé suivant l'une quelconque des revendications précédentes, dans lequel le rapport en poids/poids du 1-arylpyrazole insecticide à l'agent répulsif est compris dans l'intervalle de 2:1 à 200:1.

10. Procédé suivant la revendication 9, dans lequel le rapport est compris dans l'intervalle de 5:1 à 75:1.

11. Procédé suivant la revendication 9, dans lequel le rapport est compris dans l'intervalle de 8:1 à 50:1.

12. Procédé suivant l'une quelconque des revendications précédentes, dans lequel la composition est appliquée lorsque la température du sol est comprise dans l'intervalle de 10° à 20°C.

13. Procédé suivant l'une quelconque des revendications précédentes, dans lequel le 1-arylpyrazole insecticide est appliqué à un taux compris dans l'intervalle de 11 grammes par hectare à 1000 grammes par hectare.
